# EUROPÄISCHE PATENTSCHRIFT

(11) **EP 4 044 411 B1**
(45) Veröffentlichungstag und Bekanntmachung des Hinweises auf die Patenterteilung: **09.04.2025**
(21) Anmeldenummer: 22153940.6
(22) Anmeldetag: 28.01.2022
(51) Int. Cl.: H02K 11/01, H02K 11/40

(54) **ELEKTRISCHE MASCHINE MIT GEERDETER SCHIRMANORDNUNG**
ELECTRIC MACHINE WITH GROUNDED SHIELD ASSEMBLY
MACHINE ÉLECTRIQUE POURVUE D'AGENCEMENT DE BLINDAGE MIS À LA TERRE

(30) Priorität: 11.02.2021 DE 102021103277
(43) Veröffentlichungstag der Anmeldung: 17.08.2022
(73) Patentinhaber: ebm-papst Mulfingen GmbH & Co. KG, 74673 Mulfingen (DE)
(72) Erfinder: BÜRKERT, Martin, 74677 Dörzbach-Hohebach (DE); HÄFNER, Jochen, 74572 Blaufelden (DE); MÜLLER, Rainer, 74639 Zweiflingen-Pfahlbach (DE); SCHROTH, Sebastian, 74635 Kupferzell (DE)
(74) Vertreter: Rüger Abel Patentanwälte PartGmbB

(56) Entgegenhaltungen:
- EP-B1- 2 546 958
- JP-A- 2000 299 959
- US-A1- 2018 159 390
- US-A1- 2018 298 908
- US-A1- 2020 177 048
- US-B1- 7 113 365

## Beschreibung

Die Erfindung betrifft eine elektrische Maschine aufweisend einen Stator, einen um eine Drehachse drehbaren Rotor und eine Lageranordnung zur Lagerung des Rotors.

Bei der elektrischen Maschine handelt es sich insbesondere um eine mit Wechselstrom und vorzugsweise mit Dreiphasenwechselstrom betreibbare elektrische Maschine, beispielsweise eine Synchronmaschine oder Asynchronmaschine.

Im Motorbetrieb arbeitet die elektrische Maschine mit einem elektromagnetischen Drehfeld, das über eine Statorwicklung erzeugt wird und dazu dient, den Rotor zu bewegen. Der Rotor kann beispielsweise Permanentmagnete tragen. Die elektrische Maschine wird nicht direkt über eine oder mehrere Phasen des Energieversorgungsnetzes betrieben, sondern zwischen das Energieversorgungsnetz und die elektrische Maschine ist ein Wandler geschaltet, beispielsweise ein Frequenzumrichter. Wird die elektrische Maschine an einen Wandler angeschlossen, der einen Gleichspannungszwischenkreis aufweist, kann eine zeitlich variierende Gleichtaktspannung zwischen der Statorwicklung und einem Bezugspotential (z.B. Masse oder Erde) entstehen. Aufgrund dieser Gleichtaktspannung können in der elektrischen Maschine parasitäre Kapazitäten wirksam werden, die dann für erhöhten Verschleiß oder Schäden verantwortlich sein können. Beispielsweise kann es aufgrund von einer parasitären Kapazität und abhängig vom Betrag der Gleichtaktspannung zur Bildung von Durchschlägen oder Lichtbögen im Bereich der Lageranordnung kommen, wodurch sowohl das Lager, als auch das im Lager vorhandene Schmiermittel beschädigt werden kann oder einem erhöhten Verschleiß unterworfen ist.

WO 2019/030181 A1 beschreibt eine elektrische Maschine, bei der zwischen der Statorwicklung und den Lageraußenringen der Lageranordnung eine Schirmanordnung vorhanden ist. Die Schirmanordnung und der Stator sind jeweils mit einem elektrischen Potential elektrisch verbunden. Beispielsweise können sowohl der Stator, als auch die Schirmanordnung mit einem Massepotential der elektrischen Schaltung verbunden sein. Alternativ dazu ist es auch möglich, die Schirmanordnung zu erden, wohingegen der Stator dann mit dem Massepotential verbunden ist. Bei einem weiteren Ausführungsbeispiel weist der Stator keine Potentialanbindung auf, während die Schirmanordnung über eine Impedanz geerdet ist.

Aus K. Vostrov et al "Shielding the end windings to reduce bearing currents", 2020 International Conference on Electrical Machines (ICEM), Gothenburg, 2020, pp. 1431-1437, doi: 10.1109/ICEM49940.2020.9270673 ist als Gegenmaßnahme gegen parasitäre Effekte bekannt, elektrostatische Schirme zum Abdecken der endseitigen Statorwindungen einzusetzen. Die elektrostatische Schirmung kann eine oder mehrere Leiterschleifen aufweisen, die geerdet werden können. Die Leiterschleifen werden koaxial zur Drehachse benachbart zum Luftspalt um die axialen Enden der Statorwicklung angeordnet.

Ferner ist in F. J. T. E. Ferreira et al, "Evaluation of Slot-Embedded Partial Electrostatic Shield for High-Frequency Bearing Current Mitigation in Inverter-Fed Induction Motors" in IEEE Transactions on Energy Conversion, vol. 27, no. 2, pp. 382-390, June 2012, doi: 10.1109/TEC.2012.2187452 beschrieben, eine Schirmung in den Nutschlitzen der Statorwicklung anzuordnen, die mit Erde verbunden sind.

US 7 113 365 B1 beschreibt ein Plattenlaufwerk mit einem Elektromotor. Der Elektromotor hat einen ringförmigen Stator, aufweisend einen zylindrischen Zentralkörper. An dem zylindrischen Zentralkörper ist eine Nabe angeordnet, die in einer Axialrichtung parallel zur Drehachse neben einer Statorwicklung angeordnet ist. Die Nabe trägt Magnete, die radial außen von der Statorwicklung angeordnet sind. Die Nabe und die Magnete bilden somit den Rotor. In Axialrichtung sind die Statorwicklung und die Magnete des Rotors außerhalb des Axialbereichs angeordnet, der durch die beiden Lager begrenzt ist.

Ein Elektromotor mit einem Stator aufweisend einen hülsenförmigen Zentralkörper und einer in dem hülsenförmigen Zentralkörper drehbar gelagerten Welle zur Anordnung des Rotors ist in US 2018/0298908 A1 beschrieben. Die Welle ragt aus dem Zentralkörper heraus und weist eine sich radial zur Drehachse erstreckende Trägerplatte eines Rotors auf, an deren äußerem Ende Permanentmagnete des Rotors angeordnet sind, die die Statorwicklung koaxial umgeben.

Sowohl bei US 7 113 365 B1, als auch bei US 2018/0298908 A1 ist jeweils eine sich im Wesentlichen radial zur Drehachse erstreckende Schirmung axial benachbart zur Statorwicklung angeordnet.

WO 2019/030181 A1 zeigt einen Elektromotor mit einer Schirmung, die axiale Endbereiche einer Statorwicklung kappenförmig umgibt. Die Schirmung hat zwei Schirmeinheiten, wobei jede Schirmeinheit auf Höhe eines Lagers einer Lageranordnung angeordnet ist, mittels der der Rotor drehbar an einem Zentralkörper gelagert ist.

JP 2008-263698 A beschreibt die Möglichkeit, Lager eines Elektromotors gegenüber dem Stator elektrisch zu isolieren.

Es hat sich allerdings gezeigt, dass die bekannten Prinzipien zum Teil nicht auf alle Maschinentypen anwendbar sind und abhängig vom Maschinentyp keine ausreichende Schutzwirkung für die Lageranordnung mit sich bringen.

Es kann daher als Aufgabe der vorliegenden Erfindung angesehen werden, eine Verbesserung des Schutzes der Lageranordnung vor Gleichtaktspannungsauswirkungen bei elektrischen Maschinen zu erreichen.

Diese Aufgabe wird durch eine elektrische Maschine mit den Merkmalen des Patentanspruches 1 gelöst.

Die elektrische Maschine gemäß der vorliegenden Erfindung wird insbesondere motorisch betrieben und bildet somit einen Elektromotor. Vorzugsweise wird der Elektromotor mit Wechselstrom und insbesondere mehrphasigem Wechselstrom betrieben. Bei der elektrischen Maschine kann es sich um eine Asynchronmaschine oder Synchronmaschine handeln. Zum Steuern bzw. Betreiben der elektrischen Maschine oder des Elektromotors kann ein Wandler, beispielsweise Frequenzumrichter, verwendet werden, der einen Gleichspannungszwischenkreis aufweisen kann.

Die elektrische Maschine hat einen Stator mit einer Statorwicklung. Die Statorwicklung kann abhängig von der Anzahl der Phasen der elektrischen Maschine bzw. des Elektromotors mehrere separate Wicklungsgruppen aufweisen. Über die Statorwicklung wird ein elektromagnetisches Drehfeld um eine Drehachse erzeugt, um einen Rotor drehend um die Drehachse anzutreiben. Der Rotor ist mittels einer Lageranordnung drehbar um die Drehachse gelagert. Vorzugsweise ist der Rotor radial innen vom Stator angeordnet, so dass die elektrische Maschine als Außenläufermaschine ausgebildet ist.

Der Stator hat einen Wicklungsträger aus elektrisch leitfähigem Material, an dem die Statorwicklung angeordnet ist. Die Statorwicklung ist gegenüber dem Wicklungsträger elektrisch isoliert. Der Wicklungsträger ist elektrisch geerdet oder der Wicklungsträger ist elektrisch mit einem Bezugspotential verbunden. Zu den Wicklungsträger gehört ein Zentralkörper. Der Zentralkörper definiert die Drehachse und erstreckt sich hierzu entlang der Drehachse. Der Zentralkörper kann eine zylindrische Außenfläche aufweisen und kann als Stift oder Hülse ausgebildet sein.

Zu der Lageranordnung gehören ein erstes Lager und ein zweites Lager. Das erste Lager und das zweite Lager sind am Zentralkörper angeordnet und stützen den Rotor somit am Zentralkörper ab. Das erste Lager und das zweite Lager sind in einer Axialrichtung, parallel zur Drehachse, mit Abstand zueinander angeordnet. Der Wicklungsträger des Stators ist in Axialrichtung zwischen dem ersten Lager und dem zweiten Lager angeordnet. Bei den Lagern handelt es sich bei dem bevorzugten Ausführungsbeispiel um Wälzlager, beispielsweise Kugellager oder Rollenlager.

Die elektrische Maschine hat außerdem eine erste Schirmeinheit sowie eine zweite Schirmeinheit, die elektrisch leitfähig sind. Die Schirmeinheiten können aus einem beliebigen elektrisch leitfähigen Material hergestellt werden, beispielsweise einem metallischen Material oder einer metallischen Legierung oder einem elektrisch leitfähige Bestandteile enthaltenen Verbundmaterial.

Die erste Schirmeinheit und die zweite Schirmeinheit sind geerdet oder mit einem Bezugspotential verbunden, vorzugsweise mittels einer Impedanz. Die Impedanz kann einen ohmschen Anteil und/oder einen induktiven Anteil und/oder einen kapazitiven Anteil aufweisen. Die Impedanz kann dabei durch wenigstens ein Bauteil und/oder durch parasitäre Eigenschaften gebildet sein, beispielsweise eine Kontaktierung oder Zuleitung. Als Bezugspotential kann ein Potential eines Gleichspannungszwischenkreises des Wandlers verwendet werden, beispielsweise ein Massepotential.

Die erste Schirmeinheit kann durch ein integrales oder monolithisches erstes Schirmelement gebildet sein. Alternativ oder zusätzlich kann die zweite Schirmeinheit durch ein integrales oder monolithisches zweites Schirmelement gebildet sein.

Die erste Schirmeinheit hat einen Ringteil, der sich in einer Umfangsrichtung um die Drehachse erstreckt. Der erste Ringteil erstreckt sich von einem radial inneren Ende zu einem radial äußeren Ende schräg und/oder rechtwinklig zur Drehachse. Das radial innere Ende ist in Axialrichtung zwischen dem ersten Lager und dem Wicklungsträger angeordnet und mechanisch mit dem Zentralkörper verbunden. Vorzugsweise wird durch diese mechanische Verbindung auch eine elektrische Verbindung zwischen der ersten Schirmeinheit und dem Zentralkörper hergestellt.

Die zweite Schirmeinheit weist ebenfalls einen sich in Umfangsrichtung um die Drehachse erstreckenden zweiten Ringteil auf. Der zweite Ringteil erstreckt sich von einem radial inneren Ende nach außen zu einem radial äußeren Ende schräg und/oder rechtwinklig zur Drehachse. Das radial innere Ende ist in Axialrichtung zwischen dem zweiten Lager und dem Wicklungsträger angeordnet und mechanisch mit dem Zentralkörper verbunden. Vorzugsweise wird durch diese mechanische Verbindung auch eine elektrische Verbindung zwischen der zweiten Schirmeinheit und dem Zentralkörper hergestellt.

Somit besteht die Möglichkeit, die erste Schirmanordnung und/oder die zweite Schirmanordnung über den Zentralkörper mit dem Bezugspotential oder Erde elektrisch zu verbinden.

Die Schirmeinheiten sind Bestandteil des Stators und nicht drehbar relativ zum Zentralkörper angeordnet.

Mittels der Schirmeinheiten wird ein geschirmter Raum geschaffen, in dem sich die Statorwicklung und der Wicklungsträger befinden. Durch die elektrische Verbindung der Schirmeinheiten mit Erde oder einem Bezugspotential wird eine Beeinflussung der parasitären Kapazitäten zwischen den Lagern und der Statorwicklung sowie zwischen der Statorwicklung und dem Rotor erzielt. Die kapazitive Kopplung zwischen der Statorwicklung und dem Rotor wird verringert und/oder die kapazitive Kopplung zwischen dem Rotor und dem Stator wird erhöht. Schädliche elektrische Ströme und/oder Spannungen an den Lagern der Lageranordnung lassen sich vermeiden oder zumindest reduzieren. Die Gefahr eines Spannungsüberschlags an den Lagern wird erheblich gemindert.

Erfindungsgemäß weist der erste Ringteil und/oder der zweite Ringteil in Umfangsrichtung mit Abstand zueinander angeordnete Durchbrechungen auf, deren jeweiliger Rand einen an einem Luftleitteil angeordneten ersten Randabschnitt aufweist. Das Luftleitteil ragt schräg über die Durchbrechung. Ein in Umfangsrichtung gegenüberliegender zweiter Randabschnitt des Randes der jeweiligen Durchbrechung ist in Axialrichtung versetzt zum ersten Randabschnitt angeordnet. Dadurch kann der Kühllufttransport zur Statorwicklung verbessert werden.

Es ist vorteilhaft, wenn die erste Schirmeinheit einen ringförmigen ersten Umfangsteil aufweist, der sich in einer Axialrichtung parallel zur Drehachse und in Umfangsrichtung um die Drehachse erstreckt. Der erste Umfangsteil kann in Umfangsrichtung einen geschlossenen Ring bilden oder bevorzugt in Umfangsrichtung mit Abstand zueinander angeordnete Durchbrechungen aufweisen. Bevorzugt ist der Umfangsteil am radial äußeren Ende der ersten Schirmeinheit mit dem ersten Ringteil verbunden.

Analog hierzu kann die zweite Schirmeinheit einen ringförmigen zweiten Umfangsteil aufweisen, der sich in Axialrichtung und in Umfangsrichtung um die Drehachse erstreckt und in Umfangsrichtung einen geschlossenen Ring bilden oder bevorzugt in Umfangsrichtung mit Abstand zueinander angeordnete Durchbrechungen aufweisen kann. Bevorzugt ist der zweite Umfangsteil am radial äußeren Ende der zweiten Schirmeinheit mit dem zweiten Ringteil verbunden.

Die beiden Umfangsteile können zwischen der Statorwicklung und dem Rotor angeordnet sein. Die beiden Umfangsteile können auf derselben Zylinderfläche um die Drehachse angeordnet sein und mithin denselben Abstand von der Drehachse aufweisen.

Die optionalen Durchbrechungen im ersten Umfangsteil und/oder im zweiten Umfangsteil sind in Umfangsrichtung an den Stellen vorhanden, an vorzugsweise ein hoher Luftstrom erzeugt werden soll, beispielsweise in Radialrichtung in etwa fluchtend mit einer zwischen zwei unmittelbar benachbarten Zähnen vorhandene Nut des Wicklungsträgers. Dabei können die beiden Zähne, oder zumindest ein Teil wenigstens eines benachbarten Zahns von einem sich im Wesentlichen in Axialrichtung erstreckenden Steg des betreffenden Umfangsteils abgedeckt sein.

Die optionalen Durchbrechungen im ersten Umfangsteil und/oder im zweiten Umfangsteil können durch einen Rand begrenzt sein, der sich nicht innerhalb einer einzigen Ebene erstreckt. Beispielsweise kann zumindest ein Abschnitt des Randes aus einer Ebene herausragen, in der sich der wenigstens eine andere Abschnitt des Randes erstreckt.

Der erste Umfangsteil und der erste Ringteil können integral bzw. monolithisch ausgebildet sein. Alternativ oder zusätzlich können der zweite Umfangsteil und der zweite Ringteil integral bzw. monolithisch ausgebildet sein. Optional ist es möglich, dass die beiden Schirmeinheiten und insbesondere die beiden Umfangsteile durch sich in Axialrichtung erstreckende Axialstege miteinander verbunden sind. Die Axialstege können sich beispielsweise entlang der Zähne des Wicklungsträgers des Stators erstrecken. Die Axialstege können auch an jedem Umfangsteil vorhanden sein, ohne eine Verbindung zum jeweils anderen Umfangsteil herzustellen. In Umfangsrichtung können die Axialstege des einen Umfangsteils versetzt zu den Axialstegen des anderen Umfangsteils angeordnet sein. Sind die Axialstege der unterschiedlichen Umfangsteile einem gemeinsamen Zahn zugeordnet, können sie sich abschnittsweise in Axialrichtung entlang des Zahns erstrecken.

Es ist vorteilhaft, wenn die beiden Schirmeinheiten in einem Raum angeordnet sind, der durch den Zentralkörper, die beiden Lager und den Rotor vollständig umschlossen ist.

Der erste Umfangsteil und der zweite Umfangsteil können in Axialrichtung mit Abstand zueinander angeordnet sein. Bevorzugt sind die beiden Umfangsteile ausschließlich mittelbar über die Ringteile und den Stator, beispielsweise den Zentralkörper des Stators, miteinander mechanisch verbunden. Im Bereich des Luftspalts bzw. in einem zum Luftspalt angrenzenden Bereich der Statorwicklung sind die beiden Umfangsteile ohne direkte mechanische oder elektrische Verbindung. Die Schirmanordnung hat bei dieser Ausgestaltung keinen Bestandteil, der sich in Axialrichtung von einem Umfangsteil bis zum anderen Umfangsteil erstreckt. Der Aufbau der Schirmanordnung wird dadurch vereinfacht. Die beiden Schirmeinheiten können unabhängig voneinander gehandhabt und montiert werden.

Der erste Ringteil und/oder der zweite Ringteil weisen jeweils mehrere Durchbrechungen auf. Die Durchbrechungen sind in Umfangsrichtung mit Abstand zueinander im jeweiligen Ringteil angeordnet, vorzugsweise regelmäßig beabstandet. Die Durchbrechungen sind beispielsgemäß von einem kontinuierlichen Rand des Ringteils begrenzt und somit durch den Rand vollständig umschlossen. Radial zur Drehachse gesehen sind die Durchbrechungen vorzugsweise entlang der Statorwicklung bzw. im Bereich der Statorwicklung angeordnet. Jede Durchbrechung kann eine mit zunehmendem Abstand von der Drehachse in Umfangsrichtung zunehmende Breite aufweisen und mit Blick in Axialrichtung beispielsweise eine trapezförmige Gestalt aufweisen. Zwei in Umfangsrichtung unmittelbar benachbarte Durchbrechungen sind durch einen Steg des ersten Ringteils bzw. des zweiten Ringteils voneinander getrennt. Vorzugsweise weisen auch die optional vorhandenen Umfangsteile Durchbrechungen auf.

Der erste Ringteil und/oder der zweite Ringteil können jeweils einen inneren Ringabschnitt und/oder einen äußeren Ringabschnitt aufweisen. Der äußere Ringabschnitt kann sich beispielsweise unmittelbar an den optional vorhandenen ersten Umfangsteil bzw. den optional vorhandenen zweiten Umfangsteil anschließen. Der äußere Ringabschnitt erstreckt sich im Wesentlichen parallel zu einer Ebene, die rechtwinklig zur Drehachse ausgerichtet ist. Der innere Ringabschnitt kann sich beispielsweise unter einem Winkel von ungleich 90° gegenüber der Drehachse erstreckt.

Die beiden Schirmeinheiten bzw. die beiden Schirmelemente sind vorzugsweise mechanisch und/oder elektrisch nicht unmittelbar miteinander verbunden, sondern als separate Schirmelemente ausgebildet. Die Schirmelemente bzw. die Schirmeinheiten sind beispielsweise mechanisch und/oder elektrisch mittelbar miteinander verbunden, z.B. mittels des Zentralkörpers.

Bei einer bevorzugten Ausführungsform sind das erste Lager und das zweite Lager gegenüber dem Stator elektrisch isoliert. Das erste Lager und das zweite Lager können am Zentralkörper abgestützt sein und mittels jeweils eines inneren Isolators gegenüber dem Zentralkörper elektrisch isoliert sein.

Zusätzlich oder alternativ ist es möglich, das erste Lager und das zweite Lager elektrisch gegenüber dem Rotor zu isolieren. Beispielsweise kann zwischen dem ersten Lager und dem Rotor sowie dem zweiten Lager und dem Rotor jeweils ein äußerer Isolator angeordnet sein.

Vorteilhafte Ausgestaltungen der Erfindung ergeben sich aus den abhängigen Ansprüchen, der Beschreibung und den Zeichnungen. Nachfolgend werden bevorzugte Ausführungsbeispiele der Erfindung anhand der beigefügten Zeichnungen im Einzelnen erläutert. In den Zeichnungen zeigen:
Figur 1 ein Ausführungsbeispiel einer elektrischen Maschine in einer schematischen teilweise geschnittenen Prinzipdarstellung,
Figur 2 ein weiteres Ausführungsbeispiel der elektrischen Maschine in einer Darstellung gemäß Figur 1,
Figur 3 ein Ausführungsbeispiel der elektrischen Maschine mit einem Aufbau gemäß Figur 1 oder Figur 2 in einer perspektivischen Schnittdarstellung in einer Schnittebene entlang einer Drehachse,
Figur 4 eine Teildarstellung des Ausführungsbeispiels gemäß Figur 3 im Bereich eines Luftspalts zwischen einem Stator und einem Rotor,
Figur 5 eine Teildarstellung des Ausführungsbeispiels gemäß Figur 3 im Bereich eines radial inneren Endes einer ersten Schirmeinheit der elektrischen Maschine,
Figur 6 eine Teildarstellung des Ausführungsbeispiels gemäß Figur 3 im Bereich einer zweiten Schirmeinheit der elektrischen Maschine,
Figur 7 ein elektrisches Ersatzschaltbild eines Netzwerks aus parasitären Kapazitäten der elektrischen Maschine mit einem Aufbau entsprechend Figur 1,
Figur 8 ein elektrisches Ersatzschaltbild eines Netzwerks aus parasitären Kapazitäten der elektrischen Maschine mit einem Aufbau der elektrischen Maschine gemäß Figur 2,
Figur 9 ein Blockschaltbild eines elektrischen Schaltkreises zur Ansteuerung an einer erfindungsgemäßen elektrischen Maschine und
Figur 10 eine perspektivische Teildarstellung einer abgewandelten Ausführungsform zur Bildung einer Durchbrechung in einer Schirmeinheit.

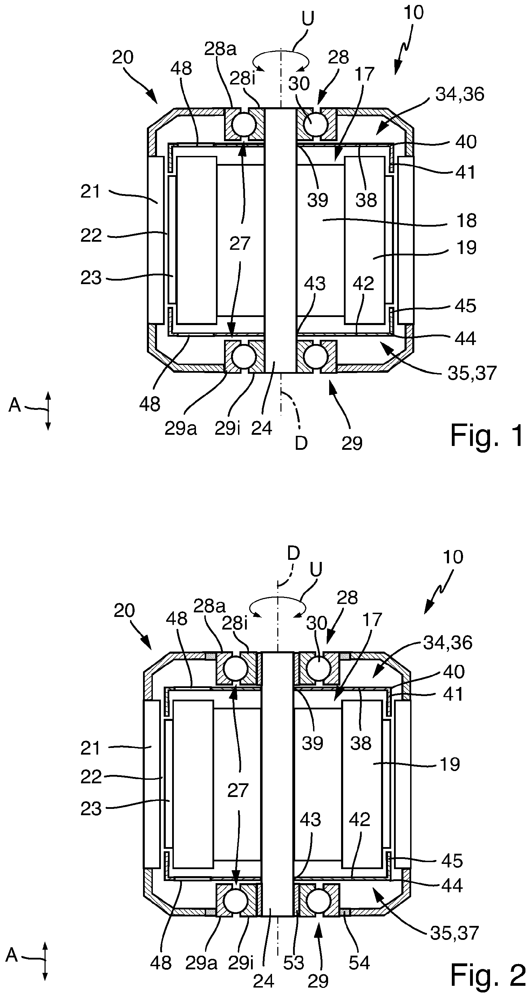

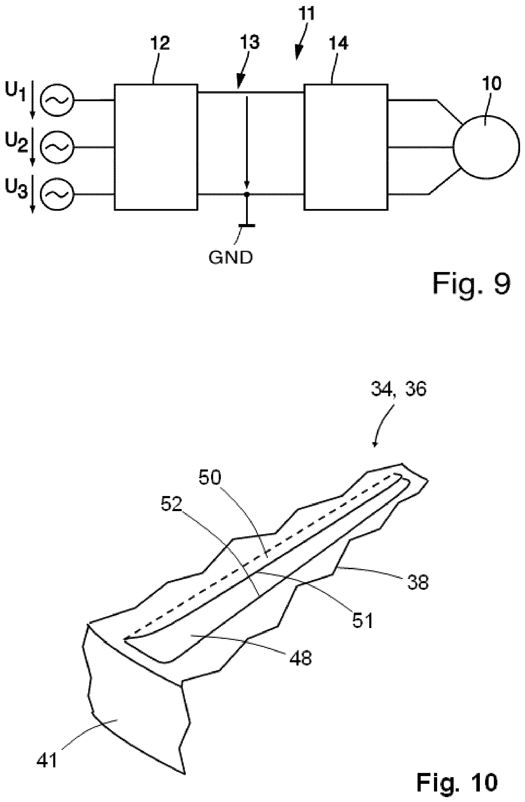

In den Figuren 1 und 2 ist jeweils ein Ausführungsbeispiel einer elektrischen Maschine 10 veranschaulicht, die motorisch betrieben werden kann und somit einen Elektromotor bilden kann. Bei der elektrischen Maschine 10 handelt es sich beispielsweise um eine mit Wechselspannung betreibbare elektrische Maschine, vorzugsweise mehrphasiger und beispielsweise dreiphasiger Wechselspannung. Das Betreiben einer elektrischen Maschine 10 mittels dreiphasiger Wechselspannung ist schematisch in Figur 9 veranschaulicht. Die elektrische Maschine 10 ist über eine Wandlerschaltung 11 mit Phasenspannungen U₁, U₂, U₃ eines dreiphasigen Wechselspannungsversorgungsnetzes verbunden. Die Wandlerschaltung 11 hat beim Ausführungsbeispiel einen Gleichrichter 12, der die dreiphasige Wechselspannung gleichrichtet und in einem Gleichspannungszwischenkreis 13 eine Gleichspannung bereitstellt, die mittels eines Wechselrichters 14 der Wandlerschaltung 11 in eine mehrphasige und beispielsgemäß dreiphasige Wechselspannung zur Erzeugung eines Drehfeldes in der elektrischen Maschine 10 bereitgestellt wird. Auch andere Wandlertopolgien können eingesetzt werden.

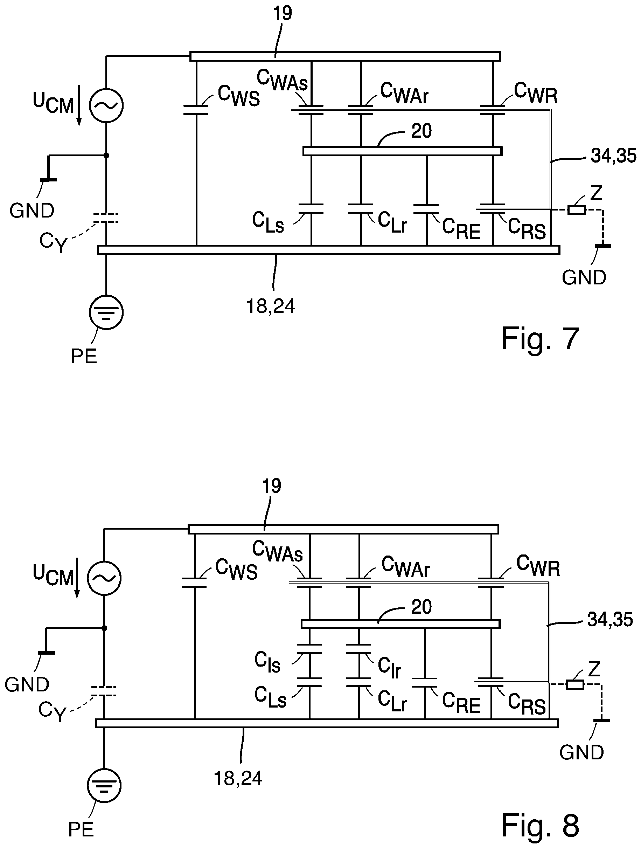

Die für die elektrische Maschine 10 bereitgestellte mehrphasige Wechselspannung zur Erzeugung des Drehfeldes durch die Wandlerschaltung 11 ist nicht immer gleich Null und dadurch entsteht eine Gleichtaktspannung U_{CM}, die auch als *common mode* bezeichnet wird. Durch diese Gleichtaktspannung kann sich an Komponenten der elektrischen Maschine, die nicht vollständig kurzgeschlossen sind und beispielsweise durch ein Schmiermittel, Luft oder dergleichen voneinander getrennt sind, ein Netzwerk von parasitären Kapazitäten bilden, wie es schematisch in den Figuren 7 und 8 für unterschiedliche Ausführungsbeispiele gemäß der Figuren 1 und 2 veranschaulicht ist. Wenn die Gleichtaktspannung einen bestimmten Betrag überschreitet, kann es zu einem Durchschlag zwischen den die parasitäre Kapazität bildenden Komponenten der elektrischen Maschine kommen, was Schäden oder einen erhöhten Verschleiß mit sich bringen kann. Diese Effekte sollen mittels der vorliegenden Erfindung reduziert und im Idealfall eliminiert werden.

Die elektrische Maschine 10 weist einen Stator 17, einen elektrisch leitfähigen Wicklungsträger 18 sowie eine Statorwicklung 19 auf. Die Statorwicklung 19 weist beim Ausführungsbeispiel mehrere elektrisch voneinander getrennte Wicklungsgruppen auf, beispielsweise drei Wicklungsgruppen. Der Wicklungsträger 18 ist beispielsgemäß an einem Zentralkörper 24 des Stators 17 angeordnet, der sich entlang einer Drehachse D erstreckt. Der Zentralkörper 24 kann stiftförmig oder hülsenförmig sein. Die radial nach außen weisende Außenfläche des Zentralkörpers 24 ist vorzugsweise stufenlos und beispielsgemäß durch eine Zylindermantelfläche gebildet.

Der Wicklungsträger 18 und optional auch der Zentralkörper 24 ist bzw. sind elektrisch leitfähig und elektrisch mit Erde PE verbunden, was in den Figuren 7 und 8 im elektrischen Ersatzschaltbild zu erkennen ist. Die Statorwicklung 19 ist gegenüber dem Wicklungsträger 18 elektrisch isoliert.

Die elektrische Maschine 10 hat außerdem einen Rotor 20, der drehbar um die Drehachse D gelagert ist und mittels eines durch die Statorwicklung 19 erzeugten Drehfeldes rotierend um die Drehachse D angetrieben werden kann. Dazu kann der Rotor 20 Permanentmagnete 21 aufweisen. In einer Radialrichtung radial zur Drehachse D ist zwischen den Permanentmagneten 21 des Rotors 20 und Zähnen 23 des Wicklungsträgers 18 ein Luftspalt 22 gebildet. Die Zähne 23 sind in Umfangsrichtung U durch nicht dargestellte Nuten voneinander getrennt, wobei in den Nuten Leiterabschnitte der Statorwicklung 19 verlaufen.

Der Rotor 20 ist mittels einer Lageranordnung um die Drehachse D drehbar gelagert, wobei sich die Lageranordnung 27 beispielsgemäß am Zentralkörper 24 oder auch an einem anderen Teil des Stators 17 abstützen kann. Beim Ausführungsbeispiel hat die Lageranordnung 27 ein erstes Lager 28 und ein zweites Lager 29, die in einer Axialrichtung A, parallel zur Drehachse D, mit Abstand zueinander angeordnet sind. Der Wicklungsträger 18 ist in Axialrichtung A zwischen dem ersten Lager 28 und dem zweiten Lager 29 angeordnet.

Jedes Lager 28, 29 hat einen Außenring 28a, 29a und einen Innenring 28i, 29i. Die Außenringe 28a, 29a sind mechanisch mit dem Rotor 20 verbunden, während die Innenringe 28i, 29i an einem stationären Teil und beispielsgemäß am Zentralkörper 24 angeordnet sind. Beim Ausführungsbeispiel sind die Lager 28, 29 als Wälzlager ausgebildet, so dass zwischen dem jeweiligen Außenring 28a, 29a und dem zugeordneten Innenring 28i, 29i Wälzkörper 30 angeordnet sind, beispielsweise Kugeln.

Die elektrische Maschine 10 hat außerdem eine erste Schirmeinheit 34 benachbart zum ersten Lager 28 und eine zweite Schirmeinheit 35 benachbart zum zweiten Lager 29. Beim Ausführungsbeispiel sind die beiden Schirmeinheiten 34, 35 jeweils durch ein integrales Bauteil gebildet, nämlich ein erstes Schirmelement 36 bzw. ein zweites Schirmelement 37. In Abwandlung zum Ausführungsbeispiel könnten die Schirmeinheiten 34, 35 jeweils auch mehrteilig ausgeführt sein.

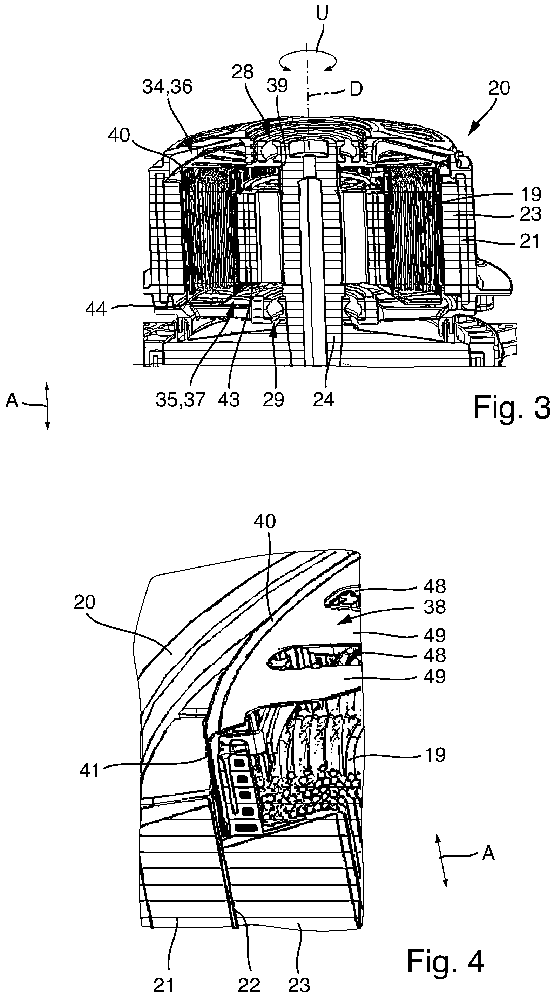

Wie es in den Figuren 3-5 zu erkennen ist, hat das erste Schirmelement 36 einen ersten Ringteil 38, der sich von einem radial inneren Ende 39 der ersten Schirmeinheit 34 bzw. des ersten Schirmelements 36 zu einem radial äußeren Ende 40 der ersten Schirmeinheit 34 bzw. des ersten Schirmelements 36 erstreckt. Am radial äußeren Ende weist die erste Schirmeinheit 34 bzw. das erste Schirmelement 36 einen sich koaxial zur Drehachse D erstreckenden ersten Umfangsteil 41 auf. Der erste Umfangsteil 41 erstreckt sich beispielsgemäß entlang einer koaxial zur Drehachse D angeordneten Zylindermantelfläche. Ausgehend vom ersten Ringteil 38 erstreckt sich der erste Umfangsteil 41 in Axialrichtung A zur zweiten Schirmeinheit 35 hin. Der erste Umfangsteil 41 ragt in Axialrichtung A über das benachbarte axiale Ende der Statorwicklung 19, das auch als Wicklungskopf bezeichnet wird. Das axiale Ende der Statorwicklung 19 und der erste Umfangsteil 41 sind in Axialrichtung A überlappend angeordnet.

Die zweite Schirmeinheit 35 bzw. das zweite Schirmelement 37 sind analog zur ersten Schirmeinheit 34 bzw. dem ersten Schirmelement 36 aufgebaut. Das zweite Schirmelement 37 hat einen zweiten Ringteil 42, der sich von einem radial inneren Ende 43 der zweiten Schirmeinheit 35 bzw. des zweiten Schirmelements 37 zu einem radial äußeren Ende 44 der zweiten Schirmeinheit 35 bzw. des zweiten Schirmelements 37 erstreckt. Am radial äußeren Ende 44 weist die zweite Schirmeinheit 35 bzw. das zweite Schirmelement 37 einen sich koaxial zur Drehachse D erstreckenden zweiten Umfangsteil 45 auf. Der zweite Umfangsteil 45 erstreckt sich beispielsgemäß entlang einer koaxial zur Drehachse D angeordneten Zylindermantelfläche. Ausgehend vom zweiten Ringteil 42 erstreckt sich der zweite Umfangsteil 45 in Axialrichtung A zur ersten Schirmeinheit 34 hin. Der zweite Umfangsteil 45 ragt in Axialrichtung A über das benachbarte axiale Ende der Statorwicklung 19, das auch als Wicklungskopf bezeichnet wird. Das axiale Ende der Statorwicklung 19 und der zweite Umfangsteil 45 sind in Axialrichtung A überlappend angeordnet.

Die radial inneren Enden 39, 43 sind beispielsgemäß unmittelbar mechanisch mit dem Zentralkörper 24 verbunden und stellen vorzugsweise hierbei eine elektrische Verbindung zwischen dem Zentralkörper 24 und der betreffenden Schirmeinheit 34 bzw. 35 her. Die Schirmeinheiten 34, 35 sind somit über den Zentralkörper 24 elektrisch mit einem Bezugspotential (hier: Massepotential GND) oder Erde PE verbunden.

Die elektrische Maschine begrenzt durch den Zentralkörper 24, die beiden Lager 28, 29 und den Rotor 20 einen Raum, in dem die Schirmeinheiten 34, 35 angeordnet sind. Kein Bestandteil der Schirmeinheiten 34, 35 ragt aus diesem Raum heraus.

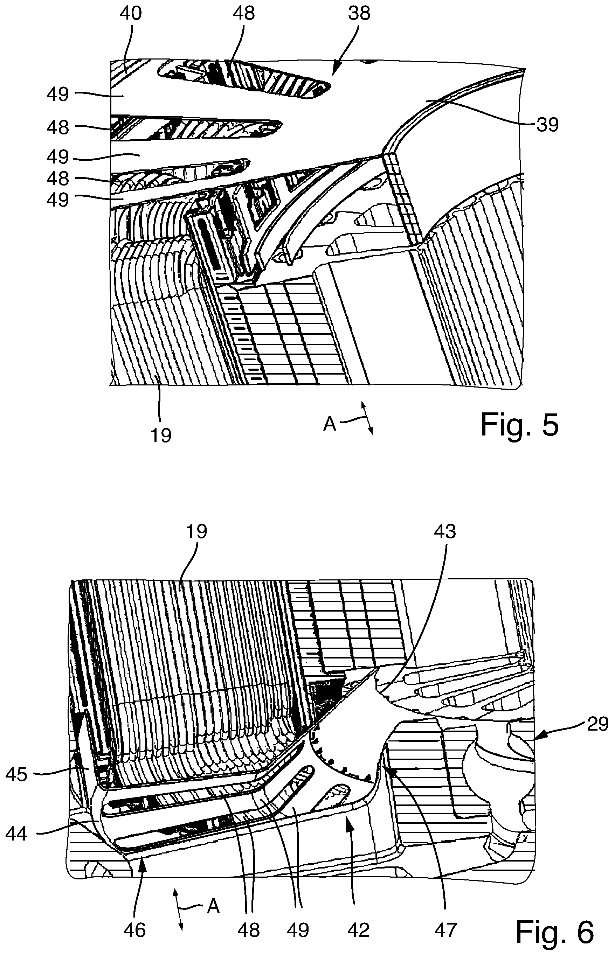

Der erste Ringteil 38 und der zweite Ringteil 42 können sich, wie in den Figuren 1 und 2 schematisch veranschaulicht, parallel zu einer Ebene erstrecken, die rechtwinklig zur Drehachse D ausgerichtet ist. Jeder Ringteil 38, 42 kann einen äußeren Ringabschnitt 46 und einen inneren Ringabschnitt 47 aufweisen. Der äußere Ringteil 46 erstreckt sich im Wesentlichen parallel zu einer Ebene, die rechtwinklig zur Drehachse D ausgerichtet ist. Bei einem abgewandelten Ausführungsbeispiel erstreckt sich der innere Ringteil 47 schräg geneigt gegenüber der Drehachse D und hat dadurch eine konische Gestalt, die sich zum äußeren Ringabschnitt 46 hin aufweitet. Dies ist in Figur 6 beispielhaft für den zweiten Ringteil 42 veranschaulicht.

In den Ringteilen 38, 42 sind in Umfangsrichtung U mit Abstand zueinander regelmäßig verteilt angeordnete Durchbrechungen 48 vorhanden. Die Durchbrechungen 48 erstrecken sich beispielsgemäß im Anschluss an das jeweils radial äußere Ende 40, 44 in Radialrichtung radial zur Drehachse D und enden vorzugsweise mit Abstand zum jeweiligen radial inneren Ende 39, 43. Die Durchbrechungen 48 sind dort im Ringteil 38, 42 vorhanden, wo sich der Ringteil 38, 42 entlang der Statorwicklung 19 erstreckt. Zwei in Umfangsrichtung U unmittelbar benachbarte Durchbrechungen 48 sind durch jeweils einen Steg 49 des Ringteils 38 bzw. 42 voneinander getrennt.

Wird über die Statorwicklung 19 ein Drehfeld erzeugt, entstehen auch elektromagnetische Streufelder in Axialrichtung A, die in den Schirmeinheiten 34, 35 Wirbelströme und dadurch Verluste erzeugen können. Durch die Durchbrechungen 48 benachbart zu den axialen Enden der Statorwicklung 19 werden solche Wirbelstromverluste zumindest reduziert. Außerdem können die Durchbrechungen 48 zur Kühlung des Wicklungsträgers 18 bzw. der Statorwicklung 19 verwendet werden. Gegebenenfalls kann am Rotor 20 ein Lüfterrad angeordnet werden, um den Kühllufttransport zu bewirken.

Wie es schematisch in Figur 10 veranschaulicht ist, hat der Rand, der die jeweilige Durchbrechung 48 begrenzt, einen Verlauf, der sich nicht vollständig innerhalb einer einzigen Ebene erstreckt. In Umfangsrichtung betrachtet weist zumindest ein Abschnitt des Randes eine Axialposition auf, die von der Axialposition des gegenüberliegenden Abschnitts des Randes abweicht. Wie es in Figur 10 zu erkennen ist, sind die sich zumindest im Wesentlichen in Radialrichtung erstreckenden Randabschnitte der Durchbrechung 48 in Axialrichtung A relativ zueinander versetzt angeordnet. Ein erster Randabschnitt 51 ist an einem Luftleitteil 50 angeordnet, das schräg über die Durchbrechung 48 ragt. Ein in Umfangsrichtung gegenüberliegende zweite Randabschnitt 52 ist in Axialrichtung A versetzt zum ersten Randabschnitt 51 angeordnet.

Das Luftleitteil 50 kann integral bzw. monolithisch mit dem sich unmittelbar anschließenden Steg 49 verbunden sein. Das Luftleitteil 50 kann beispielsweise beim Herstellen der Durchbrechung 48 durch Bilden einer Trennnut entlang des zweiten Randabschnitts 52 der Durchbrechung 48 und Umbiegen des durch die Trennnut begrenzten Bereichs hergestellt werden. Dadurch kann der Kühllufttransport zur Statorwicklung 19 verbessert werden. Vorzugsweise ist das Luftleitteil 50 auf der in Luftströmungsrichtung strömungsabgewandten Seite der Durchbrechung 48 angeordnet. Beispielsgemäß ragt das Luftleitteil 50 von der jeweiligen Schirmeinheit 34, 35 zu dem axial unmittelbar benachbarten Teil des Stators 17 hin. Es sind aber auch andere Formgebungen und Ausgestaltungen eines sich nicht innerhalb einer einzigen Ebene erstreckenden Randes der Durchbrechung 48 möglich, um den Kühllufttransport zu verbessern. In Figur 10 ist lediglich beispielhaft die erste Schirmeinheit 34 gezeigt. Die Durchbrechungen 48 der zweiten Schirmeinheit 35 können analog ausgeführt werden.

Die Umfangsteile 41, 45 weisen bei den Ausführungsbeispielen Durchbrechungen auf, analog zu den Ringteilen 38, 42, können aber alternativ auch durchbrechungslos sein. Die Umfangsteile 41, 45 erstrecken sich in Umfangsrichtung U um die Drehachse D herum, wobei die Durchbrechungen in Umfangsrichtung U gleichmäßig verteilt angeordnet sein können.

In den Figuren 7 und 8 ist jeweils ein elektrisches Ersatzschaltbild veranschaulicht, das das Netzwerk aus parasitären Kapazitäten der elektrischen Maschine 10 darstellt, wobei das Ersatzschaltbild gemäß Figur 7 der Ausführungsform gemäß Figur 1 und das Ersatzschaltbild gemäß Figur 8 der Ausführungsform gemäß Figur 2 entspricht.

Erfindungsgemäß ist der Wicklungsträger 18 und optional auch der Zentralkörper 24 geerdet (mit Erde PE). Aufgrund einer in der Wandlerschaltung 11 gebildeten Gleichtaktspannung U_{CM}, die zwischen der Statorwicklung 19 und dem Massepotential GND der Wandlerschaltung 11 anliegt, werden parasitäre Kapazitäten zwischen den Komponenten der elektrischen Maschine 10 wirksam, wie sie in den Figuren 7 und 8 veranschaulicht sind:
- C_{WS}: parasitäre Kapazität zwischen der Statorwicklung 19 und dem Wicklungsträger 18 bzw. Erde PE;
- C_{WAs}: parasitäre Kapazität zwischen der Statorwicklung 19 und den Außenringen 28a, 29a zum Stator 17 bzw. Wicklungsträger 18;
- C_{WAr}: parasitäre Kapazität zwischen der Statorwicklung 19 und den Außenringen 28a, 29a zum Rotor 20;
- C_{WR}: parasitäre Kapazität zwischen der Statorwicklung 19 und dem Rotor 20;
- C_{Ls}: Kapazität der Lageranordnung 27 zum Stator 17 bzw. Wicklungsträger 18;
- C_{Lr}: parasitäre Kapazität der Lageranordnung 27 zum Rotor 20;
- C_{RE}: parasitäre Kapazität zwischen dem Rotor 20 und Erde PE;
- C_{RS}: parasitäre Kapazität zwischen dem Rotor 20 und dem Stator 17 bzw. Wicklungsträger 18;
- C_{Y}: optionale Kapazität entstehend durch die Kopplung mit einem optional vorhandenen EMV-Filter und/oder durch im Wandler verbaute Y-Kondensatoren.

Die parasitäre Kapazität C_{Y} kann entfallen, z.B. wenn kein EMV-Filter vorhanden ist und/oder wenn im Wandler keine Y-Kondensatoren verbaut sind.

Die oben genannten parasitären Kapazitäten sind in beiden Ausführungsbeispielen gemäß der Figuren 1 und 2 vorhanden. Der Unterschied zwischen den beiden Ausführungsbeispielen der Figuren 1 und 2 besteht darin, dass beim Ausführungsbeispiel gemäß Figur 2 zusätzlich ein innerer Isolator 53 zwischen dem Zentralkörper 24 und den Lagerinnenringen 28i, 29i und/oder ein äußerer Isolator 54 zwischen den Lageraußenringen 28a, 29a und dem Rotor 20 angeordnet ist. Auf diese Weise kann die Lageranordnung 27 gegenüber dem Zentralkörper 24 und mithin dem Stator 17 und/oder gegenüber dem Rotor 20 elektrisch isoliert werden. Durch die optionalen Isolatoren 53, 54 entstehen weitere parasitäre Kapazitäten, die in Figur 8 veranschaulicht sind:
- CIs: parasitäre Kapazität des wenigstens einen inneren Isolators 53;
- CIr: parasitäre Kapazität des wenigstens einen äußeren Isolators 54.

Die Schirmeinheiten 34, 35 sind entweder geerdet (mit Erde PE kurzgeschlossen) oder über eine Impedanz Z mit dem Massepotential GND oder einem anderen festen Bezugspotential verbunden. Die Impedanz Z kann einen ohmschen Anteil und/oder einen kapazitiven Anteil und/oder einen induktiven Anteil aufweisen.

Die Schirmeinheiten 34, 35 sind elektrisch leitfähig, jedoch vorzugsweise nicht ferromagnetisch. Sie schirmen die elektrischen Streufelder der Statorwicklung 19 zumindest teilweise ab und beeinflussen daher die parasitären Kapazitäten der elektrischen Maschine, wie es schematisch in den Figuren 7 und 8 veranschaulicht ist. Insbesondere werden dabei folgende parasitäre Kapazitäten C_{WAs}, C_{WAr}, und C_{WR} zwischen der Statorwicklung 19 und dem Rotor 20 reduziert und die kapazitive Kopplung zwischen der Statorwicklung 19 und dem Rotor 20 verringert und im Idealfall eliminiert. Außerdem wird die parasitäre Kapazität C_{RS} zwischen dem Rotor 20 und dem Stator 17 bzw. Wicklungsträger 18 und/oder Zentralkörper 24 reduziert oder eliminiert. Außerdem kann auch die parasitäre Kapazität und mithin die kapazitive Kopplung zwischen dem Rotor 20 und dem Stator 17 reduziert und im Idealfall eliminiert werden. Wegen der geerdeten Schirmeinheiten 34, 35 nimmt die kapazitive Kopplung zwischen dem Rotor 20 und Erde PE zu.

Auf diese Weise werden die Lager 28, 29 der Lageranordnung 27 besser vor schädigenden Spannungsdurchschlägen oder Strömen geschützt werden.

Die Erfindung betrifft eine elektrische Maschine 10 aufweisend einen Stator 17, einen Rotor 20, eine Lageranordnung 27 mit einem ersten Lager 28 und einem zweiten Lager 29 auf entgegengesetzten Seiten des Stators 17 sowie eine Schirmanordnung aufweisend eine erste Schirmeinheit 34 und eine zweite Schirmeinheit 35. Der Rotor 20 ist über die Lager 28, 29 um eine Drehachse D drehbar gelagert. Die Schirmeinheiten 34, 35 sind elektrisch leitfähig und weisen jeweils einen Ringteil 38, 42 auf, der sich ausgehend von einem radial inneren Ende 39, 43 zu einem radial äußeren Ende 40, 44 von der Drehachse D weg erstreckt. Bevorzugt hat jede Schirmeinheit 34, 35 am radial äußeren Ende 40, 44 einen Umfangsteil 41, 45, die sich ringförmig durchgehend um die Drehachse D erstrecken und in Axialrichtung A überlappend mit dem benachbarten axialen Ende der Statorwicklung 19 des Stators 17 angeordnet sind. Die Umfangsteile 41, 45 sind vorzugsweise vollständig geschlossen, wohingegen die Ringteile 28, 42 Durchbrechungen 48 aufweisen können. Der erste Ringteil 38 und/oder der zweite Ringteil 42 hat in Umfangsrichtung U mit Abstand zueinander angeordnete Durchbrechungen 48, deren jeweiliger Rand einen an einem Luftleitteil 50 angeordneten ersten Randabschnitt 51 aufweist, wobei das Luftleitteil 50 schräg über die Durchbrechung 48 ragt und ein in Umfangsrichtung U gegenüberliegender zweiter Randabschnitt 52 des Randes der jeweiligen Durchbrechung 48 in Axialrichtung A versetzt zum ersten Randabschnitt 51 angeordnet ist.

### Bezugszeichenliste:

- 10: elektrische Maschine
- 11: Wandlerschaltung
- 12: Gleichrichter
- 13: Gleichspannungszwischenkreis
- 14: Wechselrichter

- 17: Stator
- 18: Wicklungsträger
- 19: Statorwicklung
- 20: Rotor
- 21: Permanentmagnete
- 22: Luftspalt
- 23: Zahn
- 24: Zentralkörper

- 27: Lageranordnung
- 28: erstes Lager
- 28a: Außenring des ersten Lagers
- 28i: Innenring des ersten Lagers
- 29: zweites Lager
- 29a: Außenring des zweiten Lagers
- 29i: Innenring des zweiten Lagers
- 30: Wälzkörper

- 34: erste Schirmeinheit
- 35: zweite Schirmeinheit
- 36: erstes Schirmelement
- 37: zweites Schirmelement
- 38: erster Ringteil
- 39: radial inneres Ende der ersten Schirmeinheit
- 40: radial äußeres Ende der ersten Schirmeinheit
- 41: erster Umfangsteil
- 42: zweiter Ringteil
- 43: radial inneres Ende der zweiten Schirmeinheit
- 44: radial äußeres Ende der zweiten Schirmeinheit
- 45: zweiter Umfangsteil
- 46: äußerer Ringabschnitt
- 47: innerer Ringabschnitt
- 48: Durchbrechung
- 49: Steg
- 50: Luftleitteil
- 51: erster Randabschnitt
- 52: zweiter Randabschnitt
- 53: innerer Isolator
- 54: äußerer Isolator

- A: Axialrichtung
- C_{Ir}: Kapazität Isolation rotorseitig
- C_{Is}: Kapazität Isolation statorseitig
- C_{Lr}: Kapazität Lager rotorseitig
- C_{Ls}: Kapazität Lager statorseitig
- C_{WAs}: Kapazität Statorwicklung - Außenring statorseitig
- C_{WS}: Kapazität Statorwicklung - Stator
- C_{WAr}: Kapazität Statorwicklung - Außenring rotorseitig
- C_{WR}: Kapazität Statorwicklung - Rotor
- C_{RE}: Kapazität Rotor - Erde
- C_{RS}: Kapazität Rotor - Stator
- C_{Y}: Kopplungskapazität zu EMV-Filter
- D: Drehachse
- GND: Massepotential
- PE: Erde
- U: Umfangsrichtung
- U₁: Phasenspannung erste Phase
- U₂: Phasenspannung zweite Phase
- U₃: Phasenspannung dritte Phase
- U_{CM}: Gleichtaktspannung
- Z: Impedanz

## Patentansprüche

1. Elektrische Maschine (10) aufweisend:
- einen Stator (17) aufweisend einen elektrisch mit Erde (PE) oder einem Bezugspotential (GND) verbundenen, elektrisch leitfähigen Wicklungsträger (18) und einen eine Drehachse (D) definierenden Zentralkörper (24) und eine Statorwicklung (19),
- eine Lageranordnung (27) aufweisend ein am Zentralkörper (24) angeordnetes erstes Lager (28) und ein am Zentralkörper (24) angeordnetes zweites Lager (29), wobei der Wicklungsträger (18) des Stators (17) in einer Axialrichtung (A) parallel zur Drehachse (D) zwischen dem ersten Lager (27) und dem zweiten Lager (28) angeordnet ist,
- einen mittels der Lageranordnung (27) drehbar um die Drehachse (D) gelagerten Rotor (20),
- eine elektrisch mit Erde (PE) oder einem Bezugspotential (GND) verbundene, elektrisch leitfähige erste Schirmeinheit (34), die einen ersten Ringteil (38) aufweist, der sich ringförmig in einer Umfangsrichtung (U) um die Drehachse (D) und ausgehend von einem radial inneren Ende (39) radial nach außen zu einem radial äußeren Ende (40) erstreckt, wobei das radial innere Ende (39) zwischen dem ersten Lager (28) und dem Wicklungsträger (18) angeordnet und mit dem Zentralkörper (24) verbunden ist,
- eine elektrisch mit Erde (PE) oder einem Bezugspotential (GND) verbundene, elektrisch leitfähige zweite Schirmeinheit (35), die einen zweiten Ringteil (42) aufweist, der sich ringförmig in der Umfangsrichtung (U) um die Drehachse (D) und ausgehend von einem radial inneren Ende (43) radial nach außen zu einem radial äußeren Ende (44) erstreckt, wobei das radial inneren Ende (43) zwischen dem zweiten Lager (29) und dem Wicklungsträger (18) angeordnet und mit dem Zentralkörper (24) verbunden ist,
**dadurch gekennzeichnet, dass** der erste Ringteil (38) und/oder der zweite Ringteil (42) in Umfangsrichtung (U) mit Abstand zueinander angeordnete Durchbrechungen (48) aufweist, deren jeweiliger Rand einen an einem Luftleitteil (50) angeordneten ersten Randabschnitt (51) aufweist, wobei das Luftleitteil (50) schräg über die Durchbrechung (48) ragt und ein in Umfangsrichtung (U) gegenüberliegender zweiter Randabschnitt (52) des Randes der jeweiligen Durchbrechung (48) in Axialrichtung (A) versetzt zum ersten Randabschnitt (51) angeordnet ist.

2. Elektrische Maschine nach Anspruch 1, wobei die beiden Schirmeinheiten (34, 35) in einem Raum angeordnet sind, der durch den Zentralkörper (24), die beiden Lager (28, 29) und den Rotor (20) vollständig umschlossen ist.

3. Elektrische Maschine nach einem der vorhergehenden Ansprüche, wobei die Schirmeinheiten (34, 35) über ihr jeweiliges Ringteil (38, 42) elektrisch mit dem Zentralkörper (24) und über den Zentralkörper (24) elektrisch mit Erde (PE) oder dem Bezugspotential (GND) verbunden sind.

4. Elektrische Maschine nach einem der vorhergehenden Ansprüche, wobei der Zentralkörper (24) eine zylindrische Hülse oder ein zylindrischer Stift ist.

5. Elektrische Maschine nach einem der vorhergehenden Ansprüche, wobei die erste Schirmeinheit (34) einen ringförmigen ersten Umfangsteil (41) aufweist, der sich in Axialrichtung (A) und in Umfangsrichtung (U) um die Drehachse (D) erstreckt und zwischen der Statorwicklung (19) und dem Rotor (20) angeordnet ist.

6. Elektrische Maschine nach einem der vorhergehenden Ansprüche, wobei die zweite Schirmeinheit (35) einen ringförmigen zweiten Umfangsteil (45) aufweist, der sich in Axialrichtung (A) und in Umfangsrichtung (U) erstreckt und zwischen der Statorwicklung (19) und dem Rotor (20) angeordnet ist.

7. Elektrische Maschine nach einem der vorhergehenden Ansprüche, wobei die erste Schirmeinheit (34) aus einem integral ausgebildeten ersten Schirmelement (36) besteht und/oder die zweite Schirmeinheit (35) aus einem integral ausgebildeten zweiten Schirmelement (37) besteht.

8. Elektrische Maschine nach einem der vorhergehenden Ansprüche, wobei das Luftleitteil (50) auf der in Luftströmungsrichtung strömungsabgewandten Seite der Durchbrechung (48) angeordnet ist.

9. Elektrische Maschine nach einem der vorhergehenden Ansprüche, wobei das Luftleitteil (50) von der jeweiligen Schirmeinheit (34, 35) zu dem axial unmittelbar benachbarten Teil des Stators (17) ragt.

10. Elektrische Maschine nach einem der vorhergehenden Ansprüche, wobei zwei in Umfangsrichtung (U) unmittelbar benachbarte Durchbrechungen (48) durch einen Steg des ersten Ringteils (38) oder des zweiten Ringteils (42) voneinander getrennt sind, und wobei das Luftleitteil (50) monolithisch mit dem sich unmittelbar anschließenden Steg (49) verbunden ist.

11. Elektrische Maschine nach einem der vorhergehenden Ansprüche, wobei die Durchbrechungen (48) in einer Radialrichtung radial zur Drehachse (D) in etwa fluchtend zu jeweils einer zugeordneten Nut angeordnet sind, wobei jede Nut zwischen zwei unmittelbar benachbarten Zähnen (23) des Wicklungsträgers (18) angeordnet ist.

12. Elektrische Maschine nach einem der vorhergehenden Ansprüche, wobei der erste Ringteil (38) und/oder der zweite Ringteil (42) einen äußeren Ringabschnitt (46) aufweisen, der sich parallel zu einer Ebene erstreckt, die rechtwinkelig zur Drehachse (D) ausgerichtet ist.

13. Elektrische Maschine nach einem der vorhergehenden Ansprüche, wobei zumindest einer der beiden Ringteile (38, 42) einen inneren Ringabschnitt (47) aufweist, der sich schräg zur Drehachse (D) erstreckt.

14. Elektrische Maschine nach einem der vorhergehenden Ansprüche, wobei jeweils ein innerer Isolator (53) zwischen dem ersten Lager (28) und dem Stator (17) und dem zweiten Lager (29) und dem Stator (17) angeordnet ist.

15. Elektrische Maschine nach einem der vorhergehenden Ansprüche, wobei jeweils ein äußerer Isolator (54) zwischen dem ersten Lager (28) und dem Rotor (20) und dem zweiten Lager (29) und dem Rotor (20) angeordnet ist.

## Claims

1. Electrical machine (10) comprising:
- a stator (17) comprising an electrically conductive winding support (18) electrically connected with earth (PE) or a reference potential (GND) and a central body (24) defining a rotation axis (D) and a stator winding (19),
- a bearing arrangement (27) comprising a first bearing (28) arranged on the central body (24) and a second bearing (29) arranged on the central body (24), wherein the winding support (18) of the stator (17) is arranged in an axial direction (A) parallel to the rotation axis (D) between the first bearing (28) and the second bearing (29),
- a rotor (20) rotatably supported around the rotation axis (D) by means of the bearing arrangement (27),
- an electrically conductive first shielding unit (34) electrically connected with earth (PE) or a reference potential (GND) that comprises a first ring part (38) extending in a ring-shaped manner in a circumferential direction (U) around the rotation axis (D) and extending starting from a radial inner end (39) radially outward to a radial outer end (40), wherein the radial inner end (39) is arranged between the first bearing (28) and the winding support (18) and is connected with the central body (24),
- an electrically conductive second shielding unit (35) that is electrically connected with earth (PE) or a reference potential (GND) that comprises a second ring part (42) extending in a ring-shaped manner in circumferential direction (U) around the rotation axis (D) and extending starting from a radial inner end (43) radially outward to a radial outer end (44), wherein the radial inner end (43) is arranged between the second bearing (29) and the winding support (18) and is connected with the central body (24),
**characterized in that** the first ring part (38) and/or the second ring part (42) comprise through-holes (48) arranged with distance to one another in circumferential direction, the respective edge of which has a first edge section (51) arranged at an air guide part (50), wherein the air guide part (50) extends obliquely over the through-hole (48) and a second edge section (52) of the edge of the respective through-hole (48) oppositely arranged in circumferential direction (U), is offset in axial direction (A) relative to the first edge section (51).

2. Electrical machine according to claim 1, wherein the two shielding units (34, 35) are arranged in a space that is completely surrounded by the central body (24), the two bearings (28, 29) and the rotor (20).

3. Electrical machine according to any of the preceding claims, wherein the shielding units (34, 35) are electrically connected with the central body (24) via their respective ring part (38, 42) and with earth (PE) or the reference potential (GND) via the central body (24).

4. Electrical machine according to any of the preceding claims, wherein the central body (24) is a cylindrical sleeve or a cylindrical pin.

5. Electrical machine according to any of the preceding claims, wherein the first shielding unit (34) comprises a ring-shaped first circumferential part (41) that extends in axial direction (A) and in circumferential direction (U) around the rotation axis (D) and is arranged between the stator winding (19) and the rotor (20).

6. Electrical machine according to any of the preceding claims, wherein the second shielding unit (35) comprises a ring-shaped second circumferential part (45) that extends in an axial direction (A) and in circumferential direction (U) and is arranged between the stator winding (19) and the rotor (20).

7. Electrical machine according to any of the preceding claims, wherein the first shielding unit (34) consists of an integrally configured first shielding element (36) and/or wherein the second shielding unit (35) consists of an integrally configured second shielding element (37).

8. Electrical machine according to any of the preceding claims, wherein the air guide part (50) is arranged on the downstream side of the through hole (48) in air flow direction.

9. Electrical machine according to any of the preceding claims, wherein the air guide part (50) extends from the respective shielding unit (34, 35) toward the axially directly adjacent part of the stator (17).

10. Electrical machine according to any of the preceding claims, wherein two through holes (48) that are directly adjacent in circumferential direction (U) are separated from one another by means of a web of the first ring part (38) or the second ring part (42), and wherein the air guide part (50) is monolithically connected with the directly adjacent web (49).

11. Electrical machine according to any of the preceding claims, wherein the through holes (48) are arranged approximately aligned in a radial direction radial to the rotation axis (D) relative to a respectively assigned groove, wherein each groove is arranged between two directly adjacent teeth (23) of the winding support (18).

12. Electrical machine according to any of the preceding claims, wherein the first ring part (38) and/or the second ring part (42) comprise an outer ring section (46) that extends parallel to a plane orientated orthogonal to the rotation axis (D).

13. Electrical machine according to any of the preceding claims, wherein at least one of the two ring parts (38, 42) comprises an inner ring section (47) that extends obliquely relative to the rotation axis (D).

14. Electrical machine according to any of the preceding claims, wherein one inner insulator (53) is arranged between the first bearing (28) and the stator (17) and the second bearing (29) and the stator (17) respectively.

15. Electrical machine according to any of the preceding claims, wherein an outer insulator (54) is arranged between the first bearing (28) and the rotor (20) and the second bearing (29) and the rotor (20) respectively.

## Revendications

1. Machine électrique (10) comprenant :
- un stator (17) présentant un support d'enroulement (18) électriquement conducteur, relié électriquement à la terre (PE) ou à un potentiel de référence (GND), et un corps central (24), définissant un axe de rotation (D), et un enroulement de stator (19),
- un ensemble de paliers (27) présentant un premier palier (28), disposé sur le corps central (24), et un deuxième palier (29) disposé sur le corps central (24), le support d'enroulement (18) du stator (17) étant disposé entre le premier palier (27) et le deuxième palier (29), parallèlement à l'axe de rotation (D), dans une direction axiale (A),
- un rotor (20) monté avec possibilité de rotation autour de l'axe de rotation (D), à l'aide de l'ensemble de paliers (27),
- une première unité de blindage (34) électriquement conductrice qui est reliée électriquement à la terre (PE) ou à un potentiel de référence (GND) et présente une première partie annulaire (38) qui s'étend sous une forme annulaire autour de l'axe de rotation (D), dans une direction périphérique (U), et s'étend depuis une extrémité radialement intérieure (39), radialement vers l'extérieur, vers une extrémité radialement extérieure (40), l'extrémité radialement intérieure (39) étant disposée entre le premier palier (28) et le support d'enroulement (18) et étant reliée au corps central (24),
- une deuxième unité de blindage (35) électriquement conductrice qui est reliée électriquement à la terre (PE) ou à un potentiel de référence (GND) et présente une deuxième partie annulaire (42) qui s'étend sous une forme annulaire autour de l'axe de rotation (D), dans une direction périphérique (U), et s'étend depuis une extrémité radialement intérieure (43), radialement vers l'extérieur, vers une extrémité radialement extérieure (44), l'extrémité radialement intérieure (43) étant disposée entre le deuxième palier (29) et le support d'enroulement (18) et étant reliée au corps central (24), **caractérisée en ce que** la première partie annulaire (38) et/ou la deuxième partie annulaire (42) présente des ouvertures (48) qui sont disposées à distance les unes des autres dans la direction périphérique (U) et dont le bord respectif présente une première portion de bord (51) disposée sur un élément de guidage d'air (50), l'élément de guidage d'air (50) s'étendant en biais au-dessus de l'ouverture (48), et une deuxième portion de bord (52) du bord de l'ouverture (48) respective, située en vis-à-vis dans la direction périphérique (U), étant disposée avec un décalage dans la direction axiale (A) par rapport à la première portion de bord (51).

2. Machine électrique selon la revendication 1, dans laquelle les deux unités de blindage (34, 35) sont disposées dans un espace qui est complètement entouré par le corps central (24), les deux paliers (28, 29) et le rotor (20).

3. Machine électrique selon une des revendications précédentes, dans laquelle les unités de blindage (34, 35) sont reliées électriquement au corps central (24), par l'intermédiaire de leur partie annulaire (38, 42) respective, et sont reliées électriquement à la terre (PE) ou au potentiel de référence (GND), par l'intermédiaire du corps central (24).

4. Machine électrique selon une des revendications précédentes, dans laquelle le corps central (24) est un manchon cylindrique ou une tige cylindrique.

5. Machine électrique selon une des revendications précédentes, dans laquelle la première unité de blindage (34) présente une première partie périphérique (41) annulaire qui s'étend dans la direction axiale (A) et dans la direction périphérique (U), autour de l'axe de rotation (D), et est disposée entre l'enroulement de stator (19) et le rotor (20).

6. Machine électrique selon une des revendications précédentes, dans laquelle la deuxième unité de blindage (35) présente une deuxième partie périphérique (45) annulaire qui s'étend dans la direction axiale (A) et dans la direction périphérique (U) et est disposée entre l'enroulement de stator (19) et le rotor (20).

7. Machine électrique selon une des revendications précédentes, dans laquelle la première unité de blindage (34) est constituée d'un premier élément de blindage (36) réalisé d'une seule pièce, et/ou la deuxième unité de blindage (35) est constituée d'un deuxième élément de blindage (37) réalisé d'une seule pièce.

8. Machine électrique selon une des revendications précédentes, dans laquelle l'élément de guidage d'air (50) est disposé sur le côté de l'ouverture (48) qui est détourné de l'écoulement, dans le sens de l'écoulement de l'air.

9. Machine électrique selon une des revendications précédentes, dans laquelle l'élément de guidage d'air (50) s'étend à partir de l'unité de blindage (34, 35) respective, en direction de la partie du stator (17) qui est directement adjacente dans le sens axial.

10. Machine électrique selon une des revendications précédentes, dans laquelle deux ouvertures (48) directement adjacentes dans la direction périphérique (U) sont séparées l'une de l'autre par une entretoise de la première partie annulaire (38) ou de la deuxième partie annulaire (42), et l'élément de guidage d'air (50) étant relié de manière monolithique à l'entretoise (49) directement adjacente.

11. Machine électrique selon une des revendications précédentes, dans laquelle les ouvertures (48) sont disposées dans une direction radiale, radialement par rapport à l'axe de rotation (D), en étant à peu près alignées respectivement par rapport à une rainure associée, chaque rainure étant disposée entre deux dents (23) directement adjacent du support d'enroulement (18).

12. Machine électrique selon une des revendications précédentes, dans laquelle la première partie annulaire (38) et/ou la deuxième partie annulaire (42) présentent une portion annulaire extérieure (46) qui s'étend parallèlement à un plan orienté à angle droit par rapport l'axe de rotation (D).

13. Machine électrique selon une des revendications précédentes, dans laquelle au moins une des deux parties annulaires (38, 42) présente une portion annulaire intérieure (47) qui s'étend en biais par rapport à l'axe de rotation (D).

14. Machine électrique selon une des revendications précédentes, dans laquelle un isolateur intérieur (53) est disposé respectivement entre le premier palier (28) et le stator (17) et le deuxième palier (29) et le stator (17).

15. Machine électrique selon une des revendications précédentes, dans laquelle un isolateur extérieur (54) est disposé respectivement entre le premier palier (28) et le rotor (20) et le deuxième palier (29) et le rotor (20).
